Europäisches Patentamt

European Patent Office

Office européen des brevets

(11) Numéro de publication: **0 272 986 B1**

# (12) FASCICULE DE BREVET EUROPEEN

(45) Date de publication de fascicule du brevet: **22.07.92**  (51) Int. Cl.⁵: **C01B 3/36**, B01J 4/04, C01B 3/38

(21) Numéro de dépôt: **87402929.1**

(22) Date de dépôt: **18.12.87**

---

(54) **Procédé et dispositif opérant par voie de flamme pour la fabrication de gaz de synthèse.**

---

(30) Priorité: **18.12.86 FR 8617926**

(43) Date de publication de la demande:
**29.06.88 Bulletin 88/26**

(45) Mention de la délivrance du brevet:
**22.07.92 Bulletin 92/30**

(84) Etats contractants désignés:
**BE DE FR GB IT**

(56) Documents cités:
**DE-C- 977 548**
**GB-A- 2 139 644**
**US-A- 2 772 149**

(73) Titulaire: **INSTITUT FRANCAIS DU PETROLE**
**4, Avenue de Bois Préau**
**F-92502 Rueil-Malmaison(FR)**

(72) Inventeur: **Gateau, Paul**
**26, rue de la Fontaine des Veaux**
**F-78860 Saint Nom La Breteche(FR)**
Inventeur: **Maute, Michel**
**18, rue des Nynpheas**
**F-78340 Les Claye sous Bois(FR)**
Inventeur: **Feugier, Alain**
**3, ruelle du Moulle Morainvilliers**
**F-78630 Orgeval(FR)**
Inventeur: **Perthuis, Edmond**
**31, avenue Robert Hardouin**
**F-78220 Viroflay(FR)**

Rank Xerox (UK) Business Services

## Description

La présente invention concerne un procédé et un dispositif opérant par voie de flamme pour la fabrication de gaz de synthèse.

La combustion des hydrocarbures, comme le gaz naturel, en atmosphère présentant un défaut d'oxygène, conduit à la formation de monoxyde de carbone (CO), d'hydrogène ($H_2$), mais également de dioxyde de carbone ($CO_2$) et d'eau ($H_2O$).

Par exemple, si l'on réalise la combustion d'une mole de méthane ($CH_4$) avec 0,7 mole d'oxygène, on obtient 54,9 % mole hydrogène ($H_2$) ; 31,6 % mole de monoxyde de carbone (CO) ; 1,7 % mole de dioxyde de carbone ($CO_2$) et 11,7 % mole d'eau ($H_2O$) à l'équilibre adiabatique.

Toutefois, par le processus même de combustion, on se trouvera en présence d'hydrocarbures intermédiaires, avec formation de moins de CO et d'$H_2$, mais davantage de $CO_2$ et d'$H_2O$. Des essais ont été effectués pour minimiser ce phénomène. La conversion en CO et $H_2$ est d'autant meilleure que les parois du réacteur sont adiabatiques (la forme du réacteur ne doit pas autoriser une perte de rayonnement).

Il n'y a pas de problème majeur pour des rapports O/C voisins de 1,4 mole/mole, mais pour des rapports inférieurs, il est nécessaire de préchauffer les gaz. En présence d'hydrocarbures plus lourds que le méthane, la formation de suies peut limiter l'abaissement du rapport O/C.

La présente invention fournit un procédé et un dispositif permettant d'éviter la présence de suies en sortie de réacteur notamment dans des conditions de fonctionnement délicates, par exemple pour des rapports O/C faibles ou lorsque l'on opère en présence d'hydrocarbures autres que le méthane, ou encore lorsque le réacteur est alimenté avec de l'air au lieu de l'oxygène.

Le dispositif selon l'invention permet l'obtention ou la fabrication de gaz de synthèse par combustion d'un carburant en atmosphère présentant un défaut de comburant, le comburant étant gazeux.

Le dispositif comport des premiers moyens (5, 6 ; 38) d'introduction du carburant et d'une partie du comburant dans un réacteur, et est caractérisé en ce que ladite partie du comburant introduite par lesdits premiers moyens (5, 6) étant insuffisante pour réaliser la conversion complète dudit carburant, il comporte en outre des deuxièmes moyens d'introduction d'une deuxième partie du comburant dans le réacteur (1), ces deuxièmes moyens comportant au moins une paroi poreuse (7 ; 26 ; 39,, 41, 45 ; 47, 48), lesdits deuxièmes moyens permettant d'introduire la quantité de comburant nécessaire pour réaliser la conversion complète et permettant d'oxyder les suies qui y sont accrochées.

La paroi poreuse pourra délimiter sensiblement la zone réactionnelle du réacteur.

La paroi poreuse pourra avoir sensiblement la forme d'un cylindre. Ce cylindre pourra comporter à l'une de ses extrémités les premiers moyens d'introduction du carburant et d'une partie du comburant et être fermé à son autre extrémité.

Le cylindre pourra comporter une canalisation pour la sortie des effluents.

Lorsque les gaz provenant des premiers moyens d'introduction subissent dans ledit réacteur au moins un changement de direction du fait de la présence d'une paroi déflectrice, au moins une portion de cette paroi déflectrice pourra être poreuse et servir à l'introduction d'une partie du comburant.

Le dispositif selon l'invention pourra comporter un réacteur constitué en au moins deux parties, la première partie comportant à une extrémité au moins un orifice de sortie situé sensiblement vis-à-vis des premiers moyens d'introduction, la deuxième partie du réacteur entourant ladite extrémité en laissant libre un espace de passage des gaz. Dans ce cas, la paroi déflectrice pourra correspondre à la portion de la paroi de la deuxième partie du réacteur se trouvant en vis-à-vis de l'orifice de sortie de la première partie du réacteur.

La deuxième partie du réacteur pourra englober ou envelopper sensiblement l'ensemble de la première partie du réacteur.

La paroi poreuse pourra avoir une face, qui ne délimite pas le réacteur, entourée par une enceinte étanche, cette enceinte comportant elle-même des moyens d'alimentation en comburant.

La paroi poreuse pourra être réalisée dans un matériau ayant de bonnes caractéristiques d'isolation thermique et/ou pourra comporter un matériau ayant des propriétés catalytiques, tel de la zircone.

Les premiers moyens d'introduction pourront comporter plusieurs tubes et pourront acheminer séparément ledit carburant et une partie du comburant jusque dans le réacteur.

Les différentes zones réactionnelles évoquées précédemment pourront être réalisées dans un élément poreux monobloc ou multibloc, c'est-à-dire comportant plusieurs sous-éléments qui pourront être empilés.

Ces sous-éléments empilés pourront comporter des passages et/ou des saignées et/ou des baguettes.

La présente invention concerne également un procédé pour fabriquer ou obtenir du gaz de synthèse par combustion en défaut de comburant d'un carburant, ledit comburant étant gazeux. On introduit dans un réacteur le carburant et une partie du comburant par des premiers moyens d'introduction, caractérisé en ce que ladite partie du comburant étant insuffisante pour réaliser la conversion complète dudit carburant, l'on introduit une deuxième partie du gaz comburant par l'intermédiaire d'une paroi poreuse participant à la délimitation dudit réacteur, ladite deuxième partie étant nécessaire pour réaliser la conversion complète et l'élimination en continu des suies éventuellement déposées sur ladite paroi poreuse.

Selon une variante du procédé, on pourra introduire dans la paroi poreuse un catalyseur de réaction.

Selon une autre variante du procédé, le comburant introduit par les premiers moyens d'introduction pourra être différent en nature et/ou composition de celui introduit par les deuxièmes moyens d'introduction. Cependant, préférentiellement, ils pourront être identiques.

Selon un mode de réalisation, le réacteur comporte une double enveloppe (en matériau réfractaire ou céramique) poreuse, par laquelle sera introduite une partie du comburant $O_2$, air enrichi ou non en oxygène, ou tout autre gaz pouvant intervenir au court du procédé (vapeur d'eau).

Selon un mode particulier de mise en oeuvre de la présente invention, on introduit par le brûleur l'hydrocarbure et l'oxygène séparément et par la paroi poreuse un mélange d'oxygène et de vapeur d'eau.

L'art antérieur peut être illustré par l'article de M. Kitano et Y. Otsuka intitulé "Suppression Effects of stretching flow on soot emission from laminar diffusion flames" paru dans Combustion Science and Technologie 1985, volume 42, pages 165-183 et par le brevet américain 4.618.451.

La présente invention est particulièrement bien adaptée pour la fabrication de monoxyde de carbone (CO) et d'hydrogène ($H_2$).

La présente invention sera mieux comprise et ses avantages apparaitront plus clairement à la description qui suit d'exemples particuliers, nullement limitatifs, illustrés par les figures ci-jointes parmi lesquelles :

- la figure 1 représente un premier mode de réalisation de l'invention comportant une paroi poreuse sensiblement cylindrique,
- la figure 2 illustre un autre mode de réalisation selon lequel le réacteur comporte deux parties,
- la figure 3 montre un mode de réalisation pour lequel le réacteur comporte plusieurs zones réactionnelles réalisées dans un matériau poreux, et
- les figures 4 à 10 représentent différentes variantes de réalisation de ces zones réactionnelles.

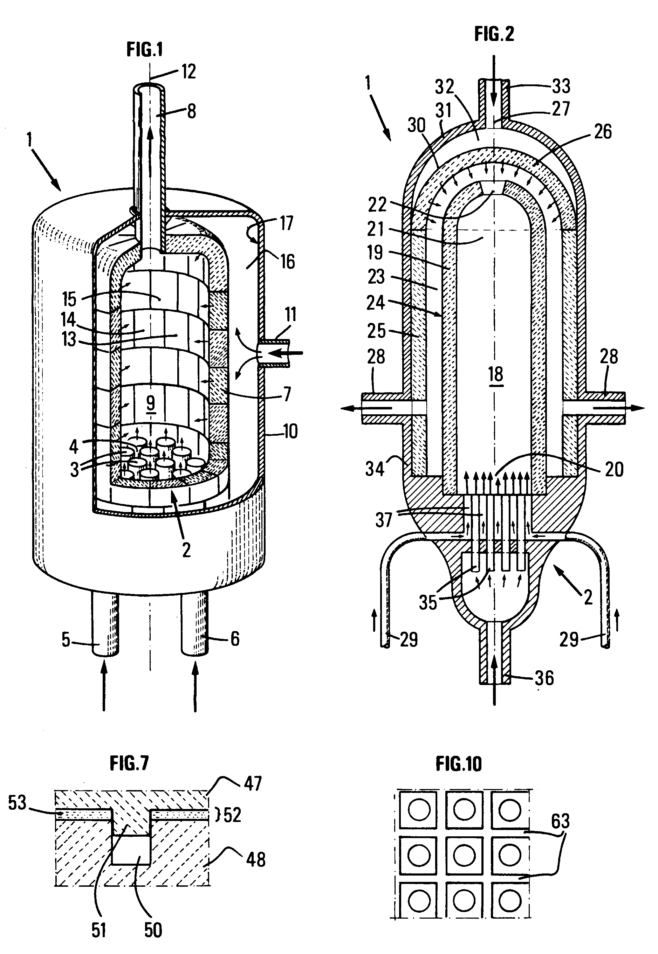

Sur la figure 1, la référence 1 désigne un réacteur dans son ensemble. Ce réacteur comporte un brûleur 2 pouvant comporter plusieurs tubes 3. Certains de ces tubes pourront servir à introduire un gaz comburant contenant de l'oxygène et les autres à l'introduction d'un carburant.

On ne sortira pas du cadre de la présente invention en utilisant un autre type de brûleur.

Dans le cas de la figure 1, les tubes 3 servent à introduire de l'oxygène et ce sont les espaces libres 4 entre les tubes qui servent à introduire le gaz à transformer, tel du méthane.

Les gaz peuvent être amenés au brûleur 2 par une canalisation 5, en ce qui concerne le gaz carburant, et par la canalisation 6 en ce qui concerne une partie du gaz comburant.

Le brûleur 2 est surmonté d'une enveloppe cylindrique poreuse 7. Cette enveloppe comporte à sa partie supérieure une canalisation de sortie des effluents 8.

Dans l'exemple de la figure 1, l'enveloppe poreuse 7 avec le brûleur, placé à son extrémité inférieure, délimite la zone réactionnelle 9.

L'enveloppe poreuse 7 est elle-même enfermée dans une enceinte étanche 10. Cette enceinte est traversée par la canalisation de sortie des effuents 8 ainsi que par les canalisations 5 et 6 d'alimentation du brûleur en méthane ($CH_4$) et en oxygène ($O_2$).

Par ailleurs, cette enceinte est alimentée en gaz comburant, tel de l'oxygène, par une canalisation 11.

Selon la présente invention, on maintient un espace libre ou zone de répartition 16 entre l'enceinte 10 et l'enveloppe poreuse 7.

L'oxygène arrivant par la canalisation 11 va occuper cet espace 16 et va baigner la paroi poreuse, l'alimentant ainsi en oxygène. L'oxygène pénètre dans la zone réactionnelle 9 et participe à la réaction pour obtenir une conversion complète du méthane en CO, $H_2$, $CO_2$ et $H_2O$.

Bien entendu, la quantité d'oxygène que l'on introduit dans la zone réactionnelle 9 par la canalisation 6 du brûleur 2 est insuffisante pour réaliser une conversion complète du méthane et l'oxygène pénétrant par la paroi poreuse 7 est nécessaire pour réaliser une conversion complète.

La paroi poreuse 7 peut avoir une porosité variable selon qu'elle alimente un point ou un autre de la zone réactionnelle 9, ceci afin de faire varier le débit introduit dans les différents endroits de la zone réactionnelle 9. Par exemple, la porosité pourra varier le long de l'axe 12 du réacteur 1.

Cette variation de porosité pourra être obtenue notamment par l'assemblage d'éléments modulaires, tels des plaques ou des briques, 13, 14, 15 de porosités différentes.

Sensiblement au niveau du brûleur 2, la paroi poreuse peut être prolongée par une paroi étanche ou par le corps même du brûleur 2.

On peut également introduire dans la zone réactionnelle 9 de la vapeur d'eau ou tout autre gaz pour compléter le procédé. Ceci pourra être réalisé, soit par la canalisation 6 du brûleur, soit par la canalisation 11 d'alimentation de l'espace libre 16.

Les parois internes de l'enceinte pourront être avantageusement revêtues d'une couche 17 de protection anti-rayonnante, ou de protection thermique.

Ce dispositif présente plusieurs avantages. Le gaz qui traverse a paroi poreuse s'échauffe et refroidit ainsi cette paroi. Toutefois, dans la fabrication du gaz de synthèse, les parois trop froides sont à proscrire car elles réduisent l'efficacité de la conversion (gel des réactions) et peuvent induire l'accumulation de carbone. Dans notre cas, l'oxygène qui diffuse crée une couche limite réactionnelle capable de protéger la paroi, alors plus froide, des gaz en cours de conversion.

Il permet d'introduire une partie de l'oxygène à distance du brûleur 2. La combustion en sortie du brûleur 2 est beaucoup plus riche puisque l'oxygène y est en quantité insuffisante pour une conversion complète.

Ainsi, la combustion du niveau du brûleur 2 s'effectue à température plus basse, ce qui protège ainsi le brûleur.

L'oxygène est graduellement introduit par la paroi poreuse 7 pour compléter la conversion.

Le dispositif selon l'invention permet un fonctionnement dans de bonnes conditions de sécurité. En effet, toute destruction du réacteur commence par l'attaque de la paroi poreuse qui est une paroi intermédiaire, du fait de la présence de l'enceinte 10.

De plus en fonctionnement, la température du jet issu du brûleur est plus basse que celle qui aurait été obtenue si tous les produits de conversion avaient été introduits par le brûleur.

On peut d'ailleurs augmenter la vitesse de diffusion dans la partie de la paroi la plus sollicitée par les échanges thermiques, cela en jouant sur la porosité de cette partie de la paroi.

Le dispositif selon l'invention évite d'introduire l'oxygène préchauffé à des températures très élevées pour alimenter le brûleur.

La figure 2 illustre un autre mode de réalisation selon lequel le réacteur comporte deux parties.

La première partie 18 est délimitée par l'intérieur d'un élément allongé 19 pouvant être avantageusement réalisé en matériau réfractaire.

Le brûleur 2 est placé à l'extrémité 20 inférieure de cet élément allongé 19. A une autre extrémité 21 de cet élément, se trouve une ouverture 22, cette ouverture alimente la deuxième partie du réacteur 23.

Cette deuxième partie du réacteur 23 enveloppe l'extrémité supérieure 21 de l'élément allongé 19.

La deuxième partie du réacteur est délimitée par la paroi externe 24 de l'élément allongé 19, par une enveloppe cylindrique 25 en matériau réfractaire et par un dôme ou calotte 26 qui surmonte cette enveloppe cylindrique 25 de manière à coiffer l'extrémité supérieure 21 de l'élément allongé 19.

Le dôme 26 est placé vis-à-vis de l'orifice ou ouverture de sortie 22 des effluents de la première partie du réacteur.

Cet orifice est lui-même placé dans l'axe 27 du brûleur qui est également l'axe du réacteur.

Les effluents sortant par l'orifice 22 sont déviés par le dôme 26 de 180° et cheminent dans la deuxième partie du réacteur 23 en longeant la paroi externe de l'élément allongé 19 pour sortir par des canalisations 28.

Selon ce mode de réalisation, le dôme 26, qui est une paroi déflectrice, est réalisé en matériau poreux, éventuellement réfractaire, et sert à introduire une autre partie du gaz comburant que celle introduite par les canalisations 29 du brûleur.

La face 30 du dôme 26 qui ne délimite pas le réacteur, est entourée par une enceinte étanche 31 qui définit une chambre 32.

Cette chambre 32 est alimentée en comburant, tel de l'oxygène, par une canalisation 33. L'oxygène diffuse à travers la paroi poreuse 26 du dôme et alimente en oxygène la deuxième partie du réacteur 23.

Sur la figure 2, l'enceinte étanche 31 fait partie d'une enveloppe externe 34 qui englobe l'ensemble du réacteur et qui comporte les canalisations d'introduction 33 de l'oxygène, les canalisations 28 de sortie des effluents et le logement pour le brûleur 2.

Le brûleur 2 est du type multitube ou autre, et comporte donc plusieurs tubes 35 d'introduction du carburant tel du gaz naturel. Celui-ci parvient au brûleur 2 par une canalisation 36.

Le comburant, tel de l'oxygène, est introduit dans le premier réacteur par l'espace 37 laissé libre entre les tubes 35 du brûleur.

Selon ce mode de réalisation, les suies provenant du premier réacteur sont collectées sur la paroi poreuse en forme de dôme. Il convient de noter que les suies grossissent par coalescence et, de ce fait, pourront être collectées plus aisément sur cette paroi.

Le dôme poreux 26 en contact avec le réacteur réchauffe l'oxygène qui le traverse, ce qui permet une parfaite oxydation des suies collectées sur la face interne du dôme. On peut également envisager une action catalytique du matériau poreux qui pourra comporter, par exemple, de la zircone.

Ainsi le dispositif selon la présente invention est notamment particulièrement intéressant lorsque des suies sont produites dans la réaction au cours de la fabrication d'un gaz de synthèse. En effet si les suies s'accrochent sur la paroi poreuse elles sont alors rebrûlées par le comburant qui suinte au travers du poreux. Toutefois la forme du réacteur de la figure 1 n'est pas favorable à l'accrochage. Celle de la figure 2 est plus efficace, les suies allant frapper la paroi 30 par l'orifice 22, mais une partie des suies risque d'être entraînée malgré tout.

Les modes de réalisation de la paroi poreuse donnés ci-après facilitent l'accrochage des suies et par suite leur élimination par oxydation du fait du comburant pénétrant par ces parois poreuses.

Suivant ces modes de réalisation le rapport Surface/Volume est augmenté.

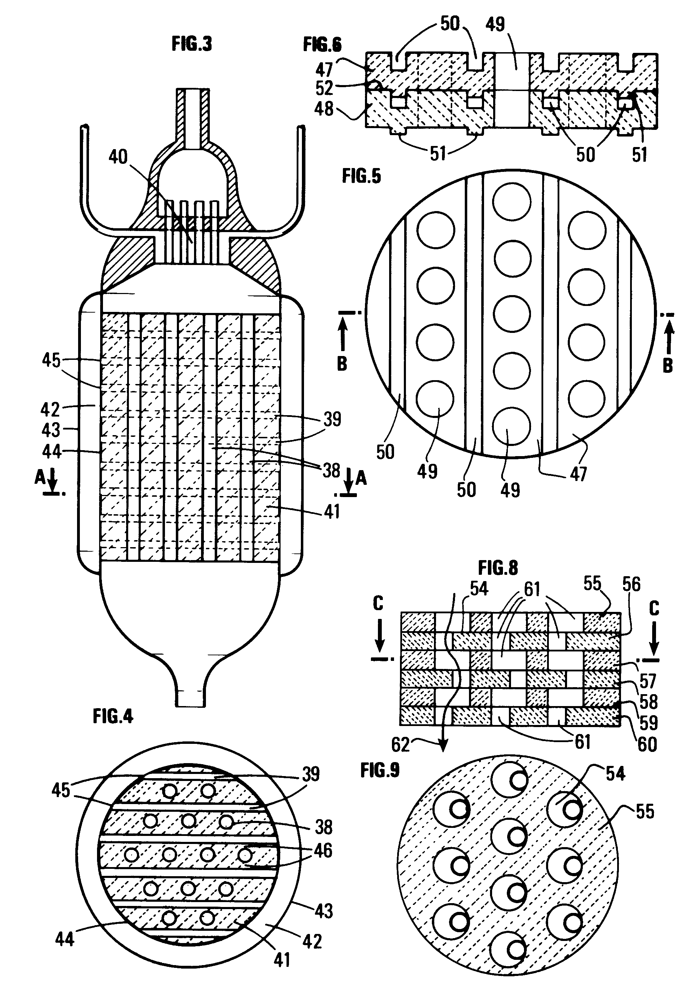

Dans le mode de réalisation de la figure 3 l'élément poreux 41 comporte une multitude d'orifices primaires 38, pour le passage du gaz de synthèse, et d'orifices secondaires 39 pour l'introduction du comburant qui doit traverser l'élément poreux 41. Les orifices primaires et secondaires ont en fait la forme de canaux et plus exactement de tubes. La référence 40 désigne le brûleur qui peut être du type de ceux déjà décrits dans la présente demande. Les canaux secondaires 39 peuvent être alimentés en comburant supplémentaire par une chambre d'alimentation 42 délimitée par une enveloppe 43 entourant une autre enveloppe 44 dans laquelle est placé l'élément poreux 41. Cette paroi 44 comporte des orifices 45 d'alimentation des canaux secondaires 39.

Sur la figure 3 l'alimentation en comburant de la chambre 42 n'a pas été représentée. La figure 4 représente une coupe transversale du réacteur représenté à la figure 3 suivant la ligne AA. On constatera sur cette figure que les canaux primaires et secondaires ne se coupent pas et que le comburant qui alimente les canaux secondaires 39 parvient aux canaux primaires 38 après "migration" dans les zones référencées 46 (figure 4) du matériau poreux 41.

Les suies qui se déposent sur les parois des canaux primaires sont oxydées par le comburant provenant des canaux secondaires.

L'élément poreux 41 peut être monobloc ou multibloc, ce qui en facilite la réalisation industrielle.

Les figures 5 et 6 représentent un exemple de l'élément poreux réalisé par empilement de plusieurs blocs.

La figure 6 correspond à une coupe suivant la ligne BB de l'élément poreux 41 représenté à la figure 5. L'élément poreux est réalisé par l'empilement de plusieurs sous-éléments poreux 47, 48. Chacun de ces éléments comporte des passages 49 qui formeront les canaux primaires après empilement de ces sous-éléments les canaux primaires.

Les canaux secondaires sont réalisés par des saignées rectilignes 50 qui coopèrent éventuellement avec des languettes 51.

Le plan de jonction 52 peut être laissé tel quel, ou bien recouvert d'une couche (non poreuse ou poreuse) pour combler le jeu.

Cette couche peut être un mortier réfractaire 53, comme représenté sur le détail de la figure 7.

Si la porosité des sous-éléments 47, 48 est suffisante, cette couche sera inutile car la part de gaz qui parvient par le plan de joint sera alors faible comparée à celle qui diffusera dans les pores.

La forme des canaux primaires et/ou secondaires pourra être variée, notamment pour réaliser un meilleur piégeage des suies et/ou une meilleure répartition du gaz comburant supplémentaire et/ou pour augmenter les surfaces d'échanges.

Ainsi les canaux pourront être pourvus de chicanes 54.

Un tel mode de réalisation est représenté aux figures 8 et 9. Il comporte un empilement de sous-éléments poreux 55 à 60 alvéolaires dont les trous 61 ou passages de diamètres divers et décentrés.

Les flèches 62 schématisent le cheminement du gaz.

La figure 9 correspond à une coupe suivant la ligne CC représentée à la figure 8.

Pour l'introduction du comburant supplémentaire on peut procéder comme dans le mode de réalisation de la figure 3.

Compte-tenu du faible débit de ce comburant secondaire, la section des orifices secondaires sera plus faible que celle des orifices primaires.

On ne sortira pas du cadre de la présente invention si les canaux secondaires 63 se coupent entre eux comme cela est représenté à la figure 10.

Le comburant utilisé pourra comporter de l'oxygène, de l'air et/ou de l'eau sous forme de vapeur et cela dans les différents modes de réalisation illustrés et le carburant pourra être du méthane ($CH_4$) ou tout autre hydrocarbures.

## Revendications

1. Dispositif de fabrication de gaz de synthèse par combustion d'un carburant en atmosphère présentant un défaut de comburant, ledit comburant étant gazeux, ce dispositif comportant des premiers moyens (5, 6 ; 38) d'introduction du carburant et d'une partie du comburant dans un réacteur, et étant caractérisé en ce que ladite partie du comburant introduite par lesdits premiers moyens (5, 6) étant insuffisante pour réaliser la conversion complète dudit carburant, il comporte en outre des deuxièmes moyens d'introduction d'une deuxième partie du comburant dans le réacteur (1), ces deuxièmes moyens comportant au moins une paroi poreuse (7 ; 26 ; 39,, 41, 45 ; 47, 48), lesdits deuxièmes moyens permettant d'introduire la quantité de comburant nécessaire pour réaliser la conversion complète et permettant d'oxyder les suies qui y sont accrochées.

**2.** Dispositif selon la revendication 1, caractérisé en ce que ladite paroi poreuse délimite au moins une partie du réacteur.

**3.** Dispositif selon la revendication 1, caractérisé en ce que ladite paroi poreuse (7) délimite sensiblement au moins une zone réactionnelle (9) dudit réacteur.

**4.** Dispositif selon la revendication 3, caractérisé en ce que ladite paroi poreuse (7) délimite sensiblement plusieurs zones réactionnelles (9).

**5.** Dispositif selon la revendication 3, caractérisé en ce que ladite paroi poreuse (7) a sensiblement la forme d'un cylindre, ce cylindre comportant à l'une de ses extrémités les premiers moyens d'introduction du carburant et d'une partie du comburant (2) et étant fermé à son autre extrémité, ledit cylindre comportant une canalisation (8) pour la sortie des effluents.

**6.** Dispositif selon la revendication 1, dans lequel les gaz provenant des premiers moyens d'introduction (2) subissent dans ledit réacteur au moins un changement de direction du fait de la présence d'une paroi déflectrice, caractérisé en ce qu'au moins une portion de cette paroi déflectrice est poreuse (30) et sert à l'introduction de ladite deuxième partie du comburant.

**7.** Dispositif selon la revendication 6, caractérisé en ce qu'il comporte un réacteur ayant au moins deux parties, la première partie (18) comportant à une extrémité au moins un orifice (22) de sortie situé sensiblement vis-à-vis desdits premiers moyens d'introduction (2), en ce que la deuxième partie de réacteur (23) entoure ladite extrémité en laissant libre un espace de passage des gaz et en ce que ladite paroi déflectrice correspond à la portion de la paroi de la deuxième partie du réacteur se trouvant en vis-à-vis dudit orifice (22) de sortie de la première partie du réacteur.

**8.** Dispositif selon la revendication 7, caractérisé en ce que la deuxième partie du réacteur enveloppe sensiblement l'ensemble de ladite première partie du réacteur.

**9.** Dispositif selon l'une des revendications précédentes, caractérisé en ce que ladite paroi poreuse comporte une face qui ne délimite pas le réacteur et en ce que cette face est entourée par une enceinte étanche (31), cette enceinte comportant elle-même des moyens d'alimentation en comburant (27, 33).

**10.** Dispositif selon l'une des revendications précédentes, caractérisé en ce que ladite paroi poreuse est réalisée dans un matériau ayant de bonnes caractéristiques d'isolation thermique.

**11.** Dispositif selon l'une des revendications précédentes, caractérisé en ce que ladite paroi poreuse comporte un matériau ayant des propriétés catalytique, tel de la zircone.

**12.** Dispositif selon l'une des revendications précédentes, caractérisé en ce que lesdits premiers moyens d'introduction du carburant et d'une première partie du comburant comportent plusieurs tubes (3, 35) et en ce que lesdits moyens acheminent séparément ledit carburant et ladite première partie du comburant jusque dans le réacteur (9, 18).

**13.** Dispositif selon la revendication 4, caractérisé en ce que lesdites zones réactionnelles sont réalisées dans des éléments poreux monoblocs.

**14.** Dispositif selon la revendication 4, caractérisé en ce que lesdites zones réactionnelles sont réalisées dans des éléments poreux comportant plusieurs sous-éléments.

**15.** Dispositif selon la revendication 14, caractérisé en ce que lesdits sous-éléments sont empilés les uns sur les autres.

**16.** Dispositif selon la revendication 15, caractérisé en ce que lesdits sous-éléments comportent des saignées, des passages et/ou des languettes.

**17.** Procédé pour fabriquer du gaz de synthèse par combustion d'un carburant dans une quantité de comburant en défaut, ledit comburant étant gazeux, selon lequel on introduit dans un réacteur le carburant et une partie du comburant par des premiers moyens d'introduction, caractérisé en ce que ladite partie du comburant étant insuffisante pour réaliser la conversion complète dudit carburant, l'on introduit une deuxième partie du gaz comburant par l'intermédiaire d'une paroi poreuse participant à la délimitation dudit réacteur, ladite deuxième partie étant nécessaire pour réaliser la conversion complète et l'élimination en continu des suies éventuellement déposées sur ladite paroi poreuse.

**18.** Procédé selon la revendication 17, caractérisé en ce que l'on a introduit un catalyseur de réaction dans la paroi poreuse.

**19.** Procédé selon l'une des revendications 17 ou 18, caractérisé en ce que le gaz comburant introduit par les premiers moyens d'introduction est de même nature et composition que celui introduit par les deuxièmes moyens d'introduction.

**20.** Procédé selon l'une des revendications 17 ou 18, caractérisé en ce que le gaz comburant introduit par les deuxièmes moyens d'introduction comporte de l'oxygène et de la vapeur d'eau.

**Claims**

**1.** Device for manufacturing synthetic gas by combustion of a fuel in an atmosphere deficient in combustive agent, the combustive agent being a gas, where this device comprises first means (5, 6) for feeding the fuel and a proportion of the combustive agent into a reactor and characterised in that the proportion of the combustive agent fed through the first means (5, 6) is insufficient to bring about complete conversion of the fuel, and further comprising second means for feeding a second proportion of the combustive agent into the reactor (1), these second means having at least one porous wall (7; 26; 39, 41, 45; 47, 48), the second means permitting the supply of the quantity of combustive agent needed to bring about complete conversion and oxidise the soot that is deposited thereon.

**2.** Device in accordance with claim 1, characterised in that the porous wall defines at least one section of the reactor.

**3.** Device in accordance with claim 1, characterised in that the porous wall (7) defines essentially at least one reaction zone (9) of the reactor.

**4.** Device in accordance with claim 3, characterised in that the porous wall (7) defines substantially several reaction zones (9).

**5.** Device in accordance with claim 3, characterised in that the porous wall (7) is essentially in the shape of a cylinder, this cylinder having at one of its ends the first feed means for the fuel and a proportion of the combustive agent (2) and being closed at its other end, the cylinder having a duct (8) for the discharge of effluents.

**6.** Device in accordance with claim 1, wherein the gases from the first feed means (2) are subjected to at least one change of direction in the reactor as a result of the presence of a deflecting wall, characterised in that at least one section of this deflecting wall is porous (30) and used to supply the second proportion of the combustive agent.

**7.** Device in accordance with claim 6, characterised in that it comprises a reactor with at least two parts, the first part (18) having at one end at least one outlet orifice (22) located essentially opposite the first feed means (2), in that the second part of the reactor (23) surrounds the said end by leaving free a space for the passage of gases and in that the deflecting wall corresponds to the section of the wall of the second part of the reactor opposite the outlet orifice (22) of the first part of the reactor.

**8.** Device in accordance with claim 7, characterised in that the second part of the reactor essentially surrounds the whole of the first part of the reactor.

**9.** Device in accordance with one of the preceding claims, characterised in that the porous wall has one face which does not adjoin the reactor and in that this face is surrounded by a sealed enclosure (31) this enclosure itself having feed means for the combustive agent (27, 33).

**10.** Device in accordance with one of the preceding claims, characterised in that the porous wall is of a material with good heat insulation properties.

**11.** Device in accordance with one of the preceding claims, characterised in that the porous walls comprise a material that has catalytic properties, such as zircon.

**12.** Device in accordance with one of the preceding claims, characterised in that the first means for feeding the fuel and a first proportion of the combustive agent have several tubes (3, 35) and in that these means convey separately the fuel and the first proportion of the combustive agent to the reactor (9, 18).

**13.** Device in accordance with claim 4, characterised in that the reaction zones are formed of porous monobloc elements.

14. Device in accordance with claim 4, characterised in that the reaction zones are formed of porous elements comprising several sub-elements.

15. Device in accordance with claim 14, characterised in that the sub-elements are stacked on top of each other.

16. Device in accordance with claim 15, characterised in that the sub-elements include grooves, passages and/or tongues.

17. Method for the manufacture of synthetic gas by combustion of a fuel in a deficient amount of combustive agent, the combustive agent being a gas, wherein the fuel and a proportion of the combustive agent are fed into the reactor through the first feed means, characterised in that the proportion of combustive agent being insufficient to bring about a full conversion of the fuel a second proportion of combustive gas is supplied through a porous wall partly defining the reactor, the second proportion being needed to bring about full conversion and eliminate continuously any soot that might be deposited on the porous wall.

18. Method in accordance with claim 17, characterised in that a reaction catalyst is included in the porous wall.

19. Method in accordance with one of claims 17 or 18, characterised in that the combustive gas fed through the first feed means is of the same nature and composition as that fed through the second feed means.

20. Method in accordance with one of claims 17 or 18, characterised in that the combustive gas supplied through the first means includes oxygen and steam.

**Patentansprüche**

1. Vorrichtung zur Herstellung von Synthesegas durch Verbrennen eines Treibstoffes in einer Atmosphäre, die ein Verbrennungsmittel (Sauerstoffträger), das gasförmig ist, im Unterschuß enthält, wobei die Vorrichtung erste Einrichtungen (5, 6; 38) zur Einführung des Treibstoffes und eines Teils des Verbrennungsmittels (Sauerstoffträgers) in einen Reaktor aufweist, dadurch gekennzeichnet, daß der durch die genannten ersten Einrichtungen (5, 6) eingeführte erste Teil des Verbrennungsmittels nicht ausreicht zur vollständigen Umwandlung des Treibstoffes, daß sie außerdem zweite Einrichtungen zur Einführung eines zweiten Teils des Verbrennungsmittels in den Reaktor (1) aufweist, wobei diese zweiten Einrichtungen mindestens eine poröse Wand (7; 26; 39, 41, 45; 47, 48) aufweisen und die Einführung der für die vollständige Umwandlung erforderlichen Menge an Verbrennungsmittel und die Oxidation der Ruße, die sich darauf abgelagert haben, erlauben.

2. Vorrichtung nach Anspruch 1, dadurch gekennzeichnet, daß die genannte poröse Wand mindestens einen Abschnitt des Reaktors begrenzt.

3. Vorrichtung nach Anspruch 1, dadurch gekennzeichnet, daß die genannte poröse Wand (7) im wesentlichen mindestens eine Reaktionszone (9) des Reaktors begrenzt.

4. Vorrichtung nach Anspruch 3, dadurch gekennzeichnet, daß die genannte poröse Wand (7) im wesentlichen mehrere Reaktionszonen (9) begrenzt.

5. Vorrichtung nach Anspruch 3, dadurch gekennzeichnet, daß die genannte poröse Wand (7) im wesentlichen die Form eines Zylinders hat, der an einem seiner Enden die ersten Einrichtungen zur Einführung des Treibstoffes und eines Teils des Verbrennungsmittels (2) aufweist und an seinem anderen Ende geschlossen ist, wobei der Zylinder eine Leitung (8) zum Ablassen der Abgase aufweist.

6. Vorrichtung nach Anspruch 1, in der die Gase, die aus den ersten Einführungseinrichtungen (2) stammen, in dem Reaktor mindestens einer Richtungsänderung unterworfen werden durch die Anwesenheit einer Deflektor-Wand, dadurch gekennzeichnet, daß mindestens ein Teil dieser Deflektor-Wand (30) porös ist und zur Einführung des zweiten Teils des Verbrennungsmittels dient.

7. Vorrichtung nach Anspruch 6, dadurch gekennzeichnet, daß sie einen Reaktor mit mindestens zwei Abschnitten umfaßt, wobei der erste Abschnitt (18) an einem Ende mindestens eine Austrittsöffnung (22) aufweist, die im wesentlichen gegenüber den genannten ersten Einführungseinrichtungen (2) angeordnet ist, daß der zweite Abschnitt des Reaktors (23) das genannte Ende umgibt unter Freilassung eines Zwischenraums zum Hindurchleiten der Gase und daß die genannte Deflektor-Wand dem Teil der Wand des zweiten Abschnitts des Reaktors entspricht, der sich gegenüber der Austrittsöffnung (22) des ersten Abschnitts des Reaktors befindet.

8. Vorrichtung nach Anspruch 7, dadurch gekennzeichnet, daß der zweite Abschnitt des Reaktors im wesentlichen den gesamten ersten Abschnitt des Reaktors umgibt.

9. Vorrichtung nach einem der vorhergehenden Ansprüche, dadurch gekennzeichnet, daß die poröse Wand eine Fläche aufweist, die den Reaktor nicht begrenzt, und daß diese Fläche von einem dichten Behälter (Schutzbehälter) (31) umgeben ist, der selbst Einrichtungen zur Einführung von Verbrennungsmittel (27, 33) aufweist.

10. Vorrichtung nach einem der vorhergehenden Ansprüche, dadurch gekennzeichnet, daß die poröse Wand aus einem Material mit guten Wärmeisoliereigenschaften besteht.

11. Vorrichtung nach einem der vorhergehenden Ansprüche, dadurch gekennzeichnet, daß die poröse Wand ein Material mit katalytischen Eigenschaften, wie Zirkonerde (Zirkoniumdioxid), enthält.

12. Vorrichtung nach einem der vorhergehenden Ansprüche, dadurch gekennzeichnet, daß die ersten Einrichtungen zur Einführung des Treibstoffes und eines ersten Teils des Verbrennungsmittels mehrere Rohre (3, 35) umfassen und daß diese Einrichtungen den Treibstoff und den ersten Teil des Verbrennungsmittels getrennt in den Reaktor (9, 18) einleiten.

13. Vorrichtung nach Anspruch 4, dadurch gekennzeichnet, daß die Reaktionszonen in porösen Elementen aus einem Stück realisiert bzw. angeordnet sind.

14. Vorrichtung nach Anspruch 4, dadurch gekennzeichnet, daß die Reaktionszonen in porösen Elementen, die mehrere Unterelemente aufweisen, realisiert bzw. angeordnet sind.

15. Vorrichtung nach Anspruch 14, dadurch gekennzeichnet, daß die Unterelemente aufeinandergestapelt sind.

16. Vorrichtung nach Anspruch 15, dadurch gekennzeichnet, daß die Unterelemente Einschnitte, Durchgänge und/oder Schlitze (Langetten) aufweisen.

17. Verfahren zur Herstellung von Synthesegas durch Verbrennen eines Treibstoffes in einer unterschüssigen Menge an Verbrennungsmittel (Sauerstoffträger), das gasförmig ist, bei dem man den Treibstoff und einen Teil des Verbrennungsmittels durch erste Einführungseinrichtungen in den Reaktor einführt, dadurch gekennzeichnet, daß der genannte Teil des Verbrennungsmittels nicht ausreicht zur vollständigen Umwandlung des Treibstoffes, daß man einen zweiten Teil des Verbrennungsmittelgases mittels einer porösen Wand, die Teil der Begrenzung des Reaktors ist, einführt, wobei dieser zweite Teil erforderlich ist zur Durchführung der vollständigen Umwandlung und kontinuierlichen Eliminierung der Ruße, die sich gegebenenfalls auf der porösen Wand abgelagert haben.

18. Verfahren nach Anspruch 17, dadurch gekennzeichnet, daß man einen Reaktionskatalysator in die poröse Wand eingeführt hat.

19. Verfahren nach einem der Ansprüche 17 oder 18, dadurch gekennzeichnet, daß das durch die ersten Einführungseinrichtungen eingeführte Verbrennungsmittelgas der gleichen Natur und der gleichen Zusammensetzung ist wie dasjenige, das durch die zweiten Einführungseinrichtungen eingeführt wird.

20. Verfahren nach einem der Ansprüche 17 oder 18, dadurch gekennzeichnet, daß das durch die zweiten Einführungseinrichtungen eingeführte Verbrennungsmittelgas Sauerstoff und Wasserdampf umfaßt.

**FIG.1**

**FIG.2**

**FIG.7**

**FIG.10**

EP 0 272 986 B1

**FIG.3**

**FIG.6**

**FIG.5**

**FIG.8**

**FIG.4**

**FIG.9**

11